# EUROPÄISCHE PATENTSCHRIFT

(11) **EP 3 466 890 B1**
(45) Veröffentlichungstag und Bekanntmachung des Hinweises auf die Patenterteilung: **02.09.2020**
(21) Anmeldenummer: 17194947.2
(22) Anmeldetag: 05.10.2017
(51) Int. Cl.: C02F 1/44, C02F 1/66, C02F 101/30, C02F 101/38, C02F 103/32

(54) **VERFAHREN ZUR AUFBEREITUNG VON ABWASSER AUS DER MILCHINDUSTRIE**
PROCESS FOR PURIFICATION OF WASTE WATER FROM DAIRY PROCESSING
PROCÉDÉ POUR LA PURIFICATION D'EAU RÉSIDUELLE DE PART DE TRAITEMENT DU LAIT

(43) Veröffentlichungstag der Anmeldung: 10.04.2019
(73) Patentinhaber: DMK Deutsches Milchkontor GmbH, 27404 Zeven (DE)
(72) Erfinder: DÖRING, Sven-Rainer, 27404 Zeven (DE); OEHLCKERS, Thorben, 21244 Buchholz (DE)
(74) Vertreter: Fabry, Bernd

(56) Entgegenhaltungen:
- VOURCH M ET AL: "Nanofiltration and reverse osmosis of model process waters fromthe dairy industry to produce water for reuse", DESALINATION, ELSEVIER, AMSTERDAM, NL, Bd. 172, Nr. 3, 20. Februar 2005 (2005-02-20), Seiten 245-256, XP027691778, ISSN: 0011-9164 [gefunden am 2005-02-20]

## Beschreibung

### GEBIET DER ERFINDUNG

Die Erfindung befindet sich auf dem Gebiet der Milchindustrie und betrifft ein Verfahren zur Aufbereitung von mit organischer Fracht belastetem Abwasser.

### STAND DER TECHNIK

Im Rahmen vieler technischer Prozesse, speziell im Bereich der Milchindustrie, fallen industrielle Abwässer beispielsweise aus Eindampfer- und Membranprozesse an, die eine CSB Belastung ("chemischer Sauerstoffbedarf) im Bereich von 500 bis 1.500 CSB aufweisen und daher über Klärwerke entsorgt werden müssen.

In der Technik unterscheidet man zwischen mechanischen (Filtrations-)Verfahren und solchen, die mikrobiologisch arbeiten. Stellvertretend für den umfangreichen Stand der Technik sei auf WO 2015 181270 A1 (WITT) und VOURCH M ET AL: "Nanofiltration and reverse osmosis of model process waters from the dairy industry to produce water for reuse",DESALINATION, Bd. 172, Nr. 3, 20. Februar 2005, Seiten 245-256 verwiesen.

Besonders problematisch sind solche Abwässer, die Milchsäure (typisch: 0.03 bis 0.1 Gew.-%) und Harnstoff (typisch: 0,5 bis 2,0 mg/kg) aufweisen, wie beispielsweise Brüdenkondensate aus der Sauermolkegewinnung, da Membranen unter üblichen Prozessbedingungen nicht in der Lage sind, so kleine Moleküle wie Harnstoff quantitativ abzutrennen, wie es erforderlich wäre, um so geklärtes Wasser weiterverwerten zu können.

Bei Kosten für die Klärung in Höhe von mehr als 2 EUR/m³ und mehreren tausend Tonnen von Brauchwasser, die im Bereich der Milchwirtschaft täglich anfallen und aufgereinigt werden müssen, ist sofort klar, dass hier ein hoher ökonomischer Druck für eine alternative Lösung besteht.

Die Aufgabe der Erfindung hat somit darin bestanden, Abwässer, die mit Milchsäure und Harnstoff belastet sind und einen CSB im Bereich von 500 und darüber aufweisen, möglichst einfach und kontinuierlich auf einen CSB kleiner 50 und insbesondere kleiner 10 zu reinigen, so dass das Abwasser nicht entsorgt bzw. industriell geklärt werden, sondern unmittelbar in Prozessschritte innerhalb der Milchindustrie zurückgeführt werden kann.

Die vorliegende Erfindung betrifft ein Verfahren zur Aufbereitung von Abwasser aus der Milchverarbeitung, umfassend oder bestehend aus den folgenden Schritten:
(a) Bereitstellung von Abwasser aus der milchverarbeitenden Industrie, dessen organische Fracht im Wesentlichen aus Milchsäure und Harnstoff besteht;
(b) Einstellen des Abwassers auf einen basischen pH-Wert unter Fällung der Milchsäure als Lactat;
(c) Unterwerfen des so behandelten Abwassers einer ersten Umkehrosmose unter Erhalt eines lactathaltigen ersten Retentats und eines lactatfreien ersten Permeats;
(d) Einstellen des so erhaltenen ersten Permeats auf einen sauren pH-Wert;
(e) Abkühlen des sauer eingestellten Permeats auf eine Temperatur im Bereich von 2 bis 10 °C;
(f) Unterwerfen des abgekühlten ersten Permeats einer zweiten Umkehrosmose unter Erhalt eines harnstoffhaltigen zweiten Retentats und eines von organischer Fracht praktisch vollständig befreiten zweiten Permeats sowie gegebenenfalls
(g) Rückführung des zweiten Permeats in einen milchverarbeitenden Prozess.

Überraschenderweise wurde gefunden, dass die oben geschilderte Vorgehensweise die Aufgabe voll umfänglich löst. Dazu wird ein entsprechend belastetes Abwasser zunächst mit einer Lauge auf einen basischen pH-Wert eingestellt, wobei Lactat gefällt wird. Dieses wird in einer ersten Umkehrosmose als Retentat abgetrennt, wobei der CSB-Wert schon auf etwa die Hälfte des Ursprungswertes abgesenkt wird. Das Permeat, welches immer noch Harnstoff enthält, wird durch Zugabe einer anorganischen Säure auf einen sauren pH-Wert eingestellt, auf 2 bis 10°C abgekühlt und auf eine zweite Umkehrosmosemembran mit gleichem Porendurchmesser gegeben. Diese beiden Maßnahmen - saurer pH-Wert, niedrige Temperatur - bewirken, dass sich die Poren der Membran so weit verengen, dass nun auch Harnstoff quantitativ abgetrennt und ein zweites Permeat erhalten wird, welches einen CSB von typisch unter 5 aufweist.

Kritisches Merkmal ist der pH-Shift, da die Lactatfällung nur im Basischen erfolgt; im Sauren würde das Lactat wieder in lösliche Milchsäure übergehen, während die Porenverengung der Osmosemembran ein saures Milieu benötigt.

### ABWASSER

Die vorliegende Erfindung betrifft konkret Abwässer, die im Rahmen der Verarbeitung von Milch und der Herstellung von Milchprodukten anfallen. Insbesondere handelt es sich dabei um Abwässer aus Konzentrierungs- und Membranprozessen, speziell bei der Eindampfung und Sprühtrocknung von Milchfraktionen sowie Filtrationsschritten, wie etwa der Umkehrosmose, da diese als organische Hauptfracht Milchsäure und Harnstoff aufweisen und nur schwer gemeinsam vollständig abzutrennen sind. Abwässer dieser Art weisen in der Regel einen CSB-Wert von etwa 500 und darüber auf, wobei der der Anteil an Milchsäure und Harnstoff zusammen mindestens 90 Gew.-% und typisch etwa 92 bis 98 Gew.-% der gesamten organischen Fracht ausmacht.

Das nachfolgende geschilderte erfindungsgemäße Verfahren teilt sich in zwei Schritte auf, nämlich die Abtrennung der Milchsäure und die Abtrennung des Harnstoffs.

### ABTRENNUNG DER MILCHSÄURE (MS)

Das aufzubereitende Abwasser wird zur Abtrennung der Milchsäure zunächst auf einen basischen pH-Wert, vorzugsweise im Bereich von etwa 9 bis etwa 11 und vorzugsweise etwa 10 eingestellt. Hierzu kommen anorganische Basen in Frage, insbesondere konzentrierte Natron- oder Kalilauge, gegebenenfalls auch Calciumhydroxid. Durch diese Maßnahme wird die Milchsäure als Natrium-, Kalium- oder Calciumlactat gefällt.

Die Abtrennung des Lactats erfolgt durch Umkehrosmose. Die Umkehrosmose oder Reversosmose ("RO") ist ein physikalisches Membranverfahren zur Konzentrierung von in Flüssigkeiten gelösten Stoffen, bei der mit Druck der natürliche Osmose-Prozess umgekehrt wird.

Das Verfahrensprinzip besteht darin, dass das Medium, in dem die Konzentration eines bestimmten Stoffes verringert werden soll, durch eine halbdurchlässige (semipermeable) Membran von dem Medium getrennt ist, in dem die Konzentration erhöht werden soll. Dieses wird einem Druck ausgesetzt, der höher sein muss als der Druck, der durch das osmotische Verlangen zum Konzentrationsausgleich entsteht. Dadurch können die Moleküle des Lösungsmittels gegen ihre "natürliche" osmotische Ausbreitungsrichtung wandern. Das Verfahren drückt sie in das Kompartiment, in dem gelöste Stoffe weniger konzentriert vorliegen. Typische Drücke für die Umkehrosmose liegen im Bereich von 3 bis 30 bar (Trinkwasserentsalzung) oder bis zu 8o bar (Meerwasserentsalzung).

Die osmotische Membran, die nur die Trägerflüssigkeit (Solvent) durchlässt und die gelösten Stoffe (Solute) zurückhält, muss diesen hohen Drücken standhalten können. Wenn der Druckunterschied das osmotische Gefälle mehr als ausgleicht, passen die Solventmoleküle wie bei einem Filter durch die Membran, während die "Verunreinigungsmoleküle" zurückgehalten werden. Im Gegensatz zu einem klassischen Membranfilter verfügen Osmosemembranen nicht über durchgehende Poren. Vielmehr wandern die Ionen und Moleküle durch die Membran hindurch, indem sie durch das Membranmaterial diffundieren, wie dies durch das Lösungs-Diffusions-Modell beschrieben wird: Der osmotische Druck steigt mit zunehmendem Konzentrationsunterschied. Wird der osmotische Druck gleich dem angelegten Druck, kommt der Prozess zum Stehen. Es liegt dann ein osmotisches Gleichgewicht vor. Ein stetiger Abfluss des Konzentrats kann das verhindern. Beim Konzentratauslass wird der Druck entweder über einen Druckregler kontrolliert oder über einen Druckaustauscher genutzt, um den im Zulauf des Systems benötigten Druck aufzubauen.

Der erste RO-Schritt kann sowohl in der Kälte als auch in der Wärme, d.h. bei einer Temperatur im Bereich von etwa 8 bis 25 °C und vorzugsweise 10 bis 12 °C oder etwa 25 bis 55 °C und insbesondere 30 bis 40 °C durchgeführt werden. Temperaturen um 25 °C haben sich als besonders vorteilhaft erwiesen, da sich hier ein guter Ausgleich zwischen ausreichend hohem Fluss zum einen und geringer mikrobieller Belastung und Verstopfung der Membran auf der anderen Seite einstellt.

Die Membranen, bei denen es sich vorzugsweise um um Kunststoffmembranen handelt, weisen einen mittleren Porendurchmesser im Bereich von etwa 50 bis etwa 500 Dalton und insbesondere etwa 100 bis etwa 200 Dalton auf.

Das Verfahren ist darauf ausgerichtet, möglichst wenig Retentat entstehen zu lassen, daher wird die erste Umkehrosmose vorzugsweise mit einem Konzentrierungsfaktor im Bereich von etwa 10 bis etwa 100 und insbesondere etwa 40 bis 60 durchgeführt.

Unter diesen Prozessbedingungen wird das Lactat quantitativ als Retentat zurückgehalten, während das Permeat bereits etwa die Hälfte seiner CSB-Belastung, d.h. seiner organischen Fracht verloren hat und nun ausgehend von 500 typisch CSB-Werte im Bereich von nur noch 250 aufweisen.

**ABTRENNUNG DES HARNSTOFFS (HS)**

Zur Abtrennung des Harnstoffs wird das so erhaltene erste Permeat auf einen sauren pH-Wert vorzugsweise im Bereich von etwa 2 bis 3 eingestellt. Hierzu eignen sich vor allem Mineralsäuren wie Salzsäure oder Salpetersäure. Entweder gleichzeitig oder im Anschluss wird das saure Permeat auf 2 bis 10 °C, vorzugsweise etwa 3 bis 5 °C abgekühlt. Dies kann beispielsweise dadurch erfolgen, dass die Umkehrosmosemembran entsprechend gekühlt wird, nämlich durch Prozesswasser aus einem Wärmetauscherschritt.

Die Membranen, bei denen es sich vorzugsweise um Kunststoffmembranen handelt, weisen einen mittleren Porendurchmesser im Bereich von etwa 50 bis etwa 500 Dalton und insbesondere etwa 100 bis etwa 200 Dalton auf und sind damit an sich zu groß, um kleine Moleküle, wie etwa Harnstoff zurückzuhalten. Überraschenderweise wurde aber gefunden, dass sich die Osmosemembranen, speziell solche aus Kunststoffen, unter sauren Bedingungen und gleichzeitig niedriger Temperatur zusammenziehen und damit nun ebenfalls eine quantitative Abtrennung des Harnstoffs ermöglichen.

Da das Verfahren wie gesagt darauf ausgerichtet ist, möglichst wenig Retentat entstehen zu lassen, wird auch die zweite Umkehrosmose vorzugsweise mit einem Konzentrierungsfaktor im Bereich von etwa 10 bis etwa 100 und insbesondere etwa 40 bis 60 durchgeführt.

Unter diesen Prozessbedingungen wird nun auch der Harnstoff quantitativ als Retentat zurückgehalten, und ein zweites Permeat erhalten, welches einen CSB-Wert von unter 50 und zwar in der Regel von etwa 1 bis etwa 10 aufweist. Dabei können die beiden Umkehrosmoseschritte umgekehrt und zunächst der Harnstoff und dann die Milchsäure abgetrennt werden, ohne dass dies einen negativen Einfluss auf den erreichten CSB-Endwert hat.

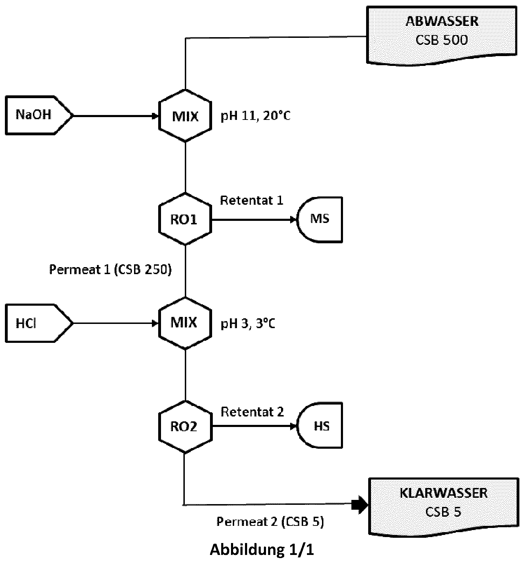

Zudem kann das Verfahren sowohl batchweise als auch kontinuierlich durchgeführt werden. Das Verfahren wird in der folgenden **Abbildung 1** noch einmal schematisch erläutert, ohne darauf eingeschränkt zu sein.

Das so geklärte Abwasser weist mit CSB-Werten von typisch 5 praktisch Frischwasserqualität auf und kann als solches wieder in Prozesse in der milchverarbeitenden Industrie eingesetzt werden, beispielsweise als Diawasser in Filtrationsschritten oder als Abgabe an das Oberflächenwasser.

### BEISPIEL 1

1.000 Liter Brüdenkondensate aus der Sauermolkegewinnung mit einem CSB-Wert von etwa 500 sowie einem Milchsäureanteil von etwa 0,08 Gew.-% sowie einer Harnstoffmenge von etwa 1 mg/kg wurden in einem Rührkessel vorgelegt und mit Natronlauge auf einen pH-Wert von 11 eingestellt. Die Lösung wurde bei etwa 20 °C etwa 10 Minuten gerührt und dann auf eine erste Umkehrosmosemembran (Material: Polydimethylsiloxan) mit einer mit einer mittleren Porengröße von 100 Dalton gegeben; der Konzentrierungsfaktor betrug 40. Es wurden 25 Liter milchsäurehaltiges Retentat sowie 975 Liter Permeat erhalten, welches einen CSB-Wert von nur noch 250 aufwies.

Das Permeat wurde in einem zweiten Rührkessel mit Salzsäure auf pH 3 eingestellt und bei etwa 20 °C etwa 10 Minuten gerührt. Die saure Lösung wurde dann auf eine zweite Umkehrosmosemembran (Material: PES) gegeben, die ebenfalls eine mittlere Porengröße von 100 Dalton besaß und durch Prozesswasser aus einem Wärmetauscherschritt auf 3 °C gekühlt worden war. Es wurden 25Liter harnstoffhaltiges Retentat und 950 Liter Permeat erhalten, welches noch einen CSB-Wert von 5 aufwies.

### BEISPIEL 2

Brüdenkondensate aus der Sauermolkegewinnung mit einem CSB-Wert von etwa 500 gemäß Beispiel 1 wurden durch ein Strömungsrohr geleitet und über einen ersten Rotor-Statormischer kontinuierlich mit wässriger 50 Gew.-%iger Natriumhydroxidlösung vermischt, so dass sich ein pH-Wert von 11 einstellte. Der basische Strom wurde auf eine erste Umkehrosmosemembran (Material: Polydimethylsiloxan) mit einer mit einer mittleren Porengröße von 100 Dalton gegeben; der Konzentrierungsfaktor betrug 40. Während das Retentat zurückgehalten wurde, wurde das Permeat weitergeleitet und über einen zweiten Rotor-Statormischer mit Salzsäure auf einen pH-Wert von 3 eingestellt. Die saure Lösung wurde kontinuierlich auf eine zweite Umkehrosmosemembran (Material: Polydimethylsiloxan) gegeben, die ebenfalls eine mittlere Porengröße von 100 Dalton besaß und durch Prozesswasser aus einem Wärmetauscherschritt auf 3 °C gekühlt worden war. Während das Retentat wiederum zurückgehalten wurde, wurde kontinuierlich ein geklärtes Abwasser als Permeat abgenommen, das noch einen CSB-Wert von 5 aufwies.

## Patentansprüche

1. Verfahren zur Aufbereitung von Abwasser aus der Milchverarbeitung, umfassend oder bestehend aus den folgenden Schritten:
(a) Bereitstellung von Abwasser aus der milchverarbeitenden Industrie, dessen organische Fracht im Wesentlichen aus Milchsäure und Harnstoff besteht;
(b) Einstellen des Abwassers auf einen basischen pH-Wert unter Fällung der Milchsäure als Lactat;
(c) Unterwerfen des so behandelten Abwassers einer ersten Umkehrosmose unter Erhalt eines lactathaltigen ersten Retentats und eines lactatfreien ersten Permeats;
(d) Einstellen des so erhaltenen ersten Permeats auf einen sauren pH-Wert;
(e) Abkühlen des sauer eingestellten Permeats auf eine Temperatur im Bereich von 2 bis 10 °C;
(f) Unterwerfen des abgekühlten ersten Permeats einer zweiten Umkehrosmose unter Erhalt eines harnstoffhaltigen zweiten Retentats und eines von organischer Fracht praktisch vollständig befreiten zweiten Permeats sowie gegebenenfalls
(g) Rückführung des zweiten Permeats in einen milchverarbeitenden Prozess.

2. Verfahren nach Anspruch 1, **dadurch gekennzeichnet, dass** man Abwasser einsetzt, das einen CSB-Wert von etwa 500 und darüber aufweist.

3. Verfahren nach den Ansprüchen 1 und/oder 2, **dadurch gekennzeichnet, dass** man Abwasser einsetzt, bei dem der Anteil an Milchsäure und Harnstoff zusammen mindestens 90 Gew.-% der gesamten organischen Fracht ausmacht.

4. Verfahren nach mindestens einem der Ansprüche 1 bis 3, **dadurch gekennzeichnet, dass** man das Abwasser in Schritt (b) auf einen pH-Wert im Bereich von etwa 9 bis etwa 11 einstellt.

5. Verfahren nach mindestens einem der Ansprüche 1 bis 4, **dadurch gekennzeichnet, dass** man die Milchsäure als Natrium-, Kalium- oder Calciumlactat fällt.

6. Verfahren nach mindestens einem der Ansprüche 1 bis 5, **dadurch gekennzeichnet, dass** man die erste Umkehrosmose im Schritt (c) bei einer Temperatur im Bereich von etwa 8 bis 25 oder etwa 25 bis 55 °C durchführt.

7. Verfahren nach mindestens einem der Ansprüche 1 bis 6, **dadurch gekennzeichnet, dass** man die erste Umkehrosmose im Schritt (c) mit einer Membran durchführt, die einen Porendurchmesser im Bereich von etwa 50 bis etwa 500 Dalton aufweist.

8. Verfahren nach mindestens einem der Ansprüche 1 bis 7, **dadurch gekennzeichnet, dass** man die erste Umkehrosmose im Schritt (c) mit einem Konzentrierungsfaktor im Bereich von etwa 10 bis etwa 100 durchführt.

9. Verfahren nach mindestens einem der Ansprüche 1 bis 8, **dadurch gekennzeichnet, dass** man das erste Permeat in Schritt (d) auf einen pH-Wert im Bereich von etwa 2 bis 3 einstellt.

10. Verfahren nach mindestens einem der Ansprüche 1 bis 9, **dadurch gekennzeichnet, dass** man das sauer eingestellte Permeat im Schritt (e) auf eine Temperatur von etwa 3 bis 5 °C abkühlt.

11. Verfahren nach mindestens einem der Ansprüche 1 bis 10, **dadurch gekennzeichnet, dass** man die zweite Umkehrosmose im Schritt (f) mit einer Membran durchführt, die einen Porendurchmesser im Bereich von etwa 50 bis etwa 500 Dalton aufweist.

12. Verfahren nach mindestens einem der Ansprüche 1 bis 11, **dadurch gekennzeichnet, dass** man die zweite Umkehrosmose im Schritt (f) mit einem Konzentrierungsfaktor im Bereich von etwa 10 bis etwa 100 durchführt.

13. Verfahren nach mindestens einem der Ansprüche 1 bis 12, **dadurch gekennzeichnet, dass** man ein zweites Permeat herstellt, welches einen CSB-Wert von unter 50 aufweist.

14. Verfahren nach mindestens einem der Ansprüche 1 bis 12, **dadurch gekennzeichnet, dass** man ein zweites Permeat herstellt, welches einen CSB-Wert von etwa 1 bis etwa 10 aufweist.

## Claims

1. A process for treating of waste water from dairy processing, comprising or consisting of the following steps:
(a) providing a waste water from the dairy-processing industry, whose organic load essentially consists of lactic acid and urea;
(b) adjusting the waste water to an alkaline pH value, while precipitating the lactic acid as lactate;
(c) subjecting the waste water thus treated to a first reverse osmosis to obtain lactate-containing first retentate and a lactate-free first permeate;
(d) adjusting the first permeate thus obtained to an acidic pH;
(e) cooling the acidic permeate to a temperature in the range of 2 to 10 ° C;
(f) subjecting the cooled first permeate to a second reverse osmosis to obtain a urea-containing second retentate and a second permeate that is substantially free from organic loading, and optionally
(g) recycling the second permeate in a milk processing process.

2. The process according to claim 1, wherein the waste water has a COD-value of about 500 or more.

3. The process according to claims 1 and/or 2, **characterized in that** waste water is used, in which the lactic acid and the urea together make up at least 90% by weight of the total organic load.

4. The process according to at least one of claims 1 to 3, **characterized in that** the waste water in step (b) is adjusted to a pH in the range from about 9 to about 11.

5. The process according to at least one of claims 1 to 4, wherein the lactic acid is precipitated as sodium lactate, potassium lactate or calcium lactate.

6. The process according to at least one of claims 1 to 5, wherein the first reverse osmosis in step (c) is performed at a temperature in the range of about 8 to 25 °C or about 25 to 55 °C.

7. The process according to at least one of claims 1 to 6, wherein the first reverse osmosis in step (c) is performed using a membrane which has a pore size within the range of about 50 to about 500 Dalton.

8. The process according to at least one of claims 1 to 7, wherein the first reverse osmosis in step (c) is performed at a concentration factor in the range of about 10 to about 100.

9. The process according to at least one of claims 1 to 8, wherein the first permeate in step (d) is adjusted to a pH value from about 2 to 3.

10. The process according to at least one of claims 1 to 9, wherein the the acidic first permeate in step (e) is cooled to a temperature of about 3 to 5 °C.

11. The process according to at least one of claims 1 to 10, wherein the second reverse osmosis step in step (f) is performed using a membrane which has a pore size within the range of about 50 to about 500 Dalton.

12. The process according to at least one of claims 1 to 11, wherein the second reverse osmosis in step (f) is performed at a concentration factor in the range of about 10 to about 100.

13. The process according to at least one of claims 1 to 12, **characterized in that** a second permeate is produced, which has a COD-value of less than 50.

14. The process according to at least one of claims 1 to 12, **characterized in that** a second permeate is produced, which has a COD-value of about 1 to about 10.

## Revendications

1. Un procédé de traitement des eaux usées provenant de la transformation du lait, comprenant ou consistant en les étapes suivantes
(a) fournir les eaux résiduaires de l'industrie de transformation du lait, dont la charge organique est essentiellement constituée d'acide lactique et d'urée ;
(b) l'ajustement des eaux usées à une valeur de pH basique avec précipitation de l'acide lactique sous forme de lactate ;
(c) en soumettant les eaux usées ainsi traitées à une première osmose inverse pour obtenir un premier rétentat contenant du lactate et un premier perméat sans lactate ;
(d) ajuster le premier perméat ainsi obtenu à un pH acide ;
(e) le refroidissement du perméat acide à une température comprise entre 2 et 10 °C ;
(f) soumettre le premier perméat refroidi à une seconde osmose inverse pour obtenir un second rétentat contenant de l'urée et un second perméat pratiquement totalement libéré de la charge organique et, si on le souhaite, un second perméat contenant de l'urée.
(g) retourner le second perméat dans un procédé de transformation du lait.

2. Le procédé selon la revendication 1, **caractérisé en ce que** l'on utilise des eaux usées dont la valeur de DCO est d'environ 500 et plus.

3. Le procédé selon les revendications 1 et/ou 2, **caractérisé en ce que** l'on utilise des eaux usées dans lesquelles la proportion d'acide lactique et d'urée constitue ensemble au moins 90 % en poids de la charge organique totale.

4. Le procédé selon au moins une des revendications 1 à 3, **caractérisé en ce que** l'eau usée à l'étape (b) est ajustée à une valeur de pH dans la plage d'environ 9 à environ 11.

5. Le procédé selon au moins une des revendications 1 à 4, **caractérisé en ce que** l'acide lactique est précipité sous forme de lactate de sodium, de potassium ou de calcium.

6. Le procédé selon au moins une des revendications 1 à 5, **caractérisé en ce que** la première osmose inverse de l'étape (c) est effectuée à une température comprise entre environ 8 et 25 ou entre environ 25 et 55°C.

7. Le procédé selon au moins une des revendications 1 à 6, qui consiste à effectuer la première osmose inverse à l'étape (c) avec une membrane qui a un diamètre de pore compris entre environ 50 et environ 500 daltons.

8. Le procédé selon au moins une des revendications 1 à 7, qui consiste à effectuer la première osmose inverse à l'étape (c) avec un facteur de concentration compris entre environ 10 et environ 100.

9. Le procédé selon au moins une des revendications 1 à 8, **caractérisé en ce que** le premier perméat de l'étape (d) est ajusté à une valeur de pH dans la gamme d'environ 2 à 3.

10. Le procédé selon au moins une des revendications 1 à 9, qui comprend le refroidissement du premier perméat de l'étape (e) à une température d'environ 3 à 5°C.

11. Le procédé selon au moins une des revendications 1 à 10, **caractérisé en ce que** la deuxième osmose inverse de l'étape (f) est effectuée avec une membrane qui a un diamètre de pore dans la gamme d'environ 50 à environ 500 Daltons.

12. Le procédé selon au moins une des revendications 1 à 11, qui consiste à effectuer la deuxième osmose inverse à l'étape (f) avec un facteur de concentration dans la gamme d'environ 10 à environ 100.

13. Le procédé selon au moins une des revendications 1 à 12, **caractérisé en ce que** l'on prépare un second perméat qui a une valeur de DCO inférieure à 50.

14. Le procédé selon au moins une des revendications 1 à 12, **caractérisé en ce que** l'on prépare un second perméat qui a une valeur de DCO d'environ 1 à environ 10.
